# EUROPÄISCHE PATENTANMELDUNG

(11) **EP 1 249 323 A2**
(43) Veröffentlichungstag der Anmeldung: **16.10.2002**
(21) Anmeldenummer: 02005611.5
(22) Anmeldetag: 12.03.2002
(51) Int. Cl.: B28B 1/00, C03B 9/00

(54) **Verfahren und Vorrichtung zum Druckformen von Gefässen**

(30) Priorität: 14.03.2001 DE 10112634
(71) Anmelder: Westerwälder Blumentopffabrik Spang GmbH & Co. KG, 56235 Ransbach-Baumbach (DE)
(72) Erfinder: Grebert, Hans-Jürgen, 56235 Ransbach-Baumbach (DE)
(74) Vertreter: Patentanwälte Wenzel & Kalkoff

(57) **Zusammenfassung**

Die Erfindung betrifft ein Verfahren zur Herstellung eines Gefäßes (26), mit den Schritten: Bereitstellen eines vorgefertigten, plastischen Gefäßes (2) mit einer Gefäßöffnung (10), Bereitstellen einer Form, die so beschaffen ist, daß das Gefäß (2) in die Form (4) gesetzt werden kann, wobei an mindestens einem Abschnitt der Außenfläche (14) des Gefäßes (2) die Innenfläche (12) der Form (4) in einem Abstand (16) zu der Außenfläche (14) des Gefäßes (2) liegt, im wesentlichen fluiddichtes Anschließen der Gefäßöffnung (10) an eine Fluidquelle mit einem Druck, der ausreicht, das Gefäßmaterial gegen die Innenfläche (12) der Form (4) zu drücken, Beaufschlagen der Innenfläche (19) des Gefäßes (2) mit dem Fluid aus der Fluidquelle, Abnehmen der Form (4) und Endbehandlung des Gefäßes (26) sowie eine Vorrichtung hierfür.

## Beschreibung

Die Erfindung bezieht sich auf ein Verfahren zur Herstellung eines Gefäßes, insbesondere eines Ton- oder Keramikgefäßes.

Bei solchen Verfahren wird als Ausgangsmaterial ein unförmiger Batzen, beispielsweise keramische Masse, verwendet. Mittels Spezialmaschinen wird der Batzen in die gewünschte äußere Form des Gefäßes gebracht, worauf in dem Herstellungsverfahren das übliche Trocknen und Brennen der geformten Gefäße folgt. Der Einsatz dieser Spezialmaschinen ist sehr zeitraubend, so daß naturgemäß mit sehr langen Produktionszeiten zu rechnen ist. Darüber hinaus tritt bei dem Einsatz der Spezialmaschinen üblicherweise eine Relativbewegung der keramischen Masse mit einer Formoberfläche einer Spezialmaschine auf, so daß die Form Verschleiß unterliegt.

Ausgehend hiervon liegt der Erfindung die Aufgabe zugrunde, ein Verfahren bereitzustellen, das die Nachteile der bekannten Verfahren überwindet.

Dazu wird in einem im Stand der Technik nicht bekannten ersten Verfahrensschritt ein vorgefertigtes, plastisches Gefäß mit einer Gefäßöffnung bereitgestellt. Das Gefäßmaterial ist somit noch verformbar. Zur Vorfertigung der Gefäße können Standard-Maschinen, beispielsweise zur Formgebung für Blumentopf-Gefäße verwendet werden, insbesondere die Blumentopf-Gefäßform gestattet als Ausgangsform bei der Durchführung des hier beschriebenen Verfahrens eine Vielzahl verschiedener Gefäß-Endformen.

In einem zweiten Verfahrensschritt wird eine Form bereitgestellt, die so beschaffen ist, daß das vorgefertigte Gefäß in die Form gesetzt werden kann, wobei an mindestens einem Abschnitt der Außenfläche des vorgefertigten Gefäßes die Innenfläche der Form in einem Abstand zu der Außenfläche liegt. Anders ausgedrückt, bildet die Innenfläche der Form mindestens einen Hohlraum mit der Außenfläche des Gefäßes aus, wobei unter Außenfläche diejenige Fläche des Gefäßes verstanden wird, die von der Gefäßöffnung begrenzt wird.

Anschließend wird in einem weiteren Verfahrensschritt die Gefäßöffnung im wesentlichen fluiddicht an eine Fluidquelle angeschlossen. Die Fluidquelle liefert ein Fluid mit einem Druck, der ausreicht, das Gefäßmaterial gegen die Innenfläche der Form zu drücken, und zwar unter plastischer Verformung des Gefäßmaterials. Die Wahl des erforderlichen Drucks richtet sich in erster Linie nach dem Material des vorgefertigten, plastischen Gefäßes. Für Fachleute läßt sich leicht ermitteln, welche Drücke für jeweilige Materialien erforderlich sind, um eine beispielsweise anfängliche Blumentopfform in eine bauchige Form zu bringen. Übliche Fluid-Drücke liegen in der Regel nicht höher als 10 bar, vorzugsweise unter 6 bar.

Anschließend wird die Fluidquelle geöffnet, so daß im Innenraum des Gefäßes der von der Fluidquelle bereitgestellte Druck anliegt, so daß sich die erwünschte Verformung, also die Ausdehnung des vorgefertigten Gefäßes bis an die Innenfläche der Form ergeben kann.

In einem nächsten Schritt wird die Form abgenommen. Zu diesem Zweck ist die Form mindestens zweiteilig ausgebildet, so daß sie sich von dem Gefäß, das seine Endform eingenommen hat, abnehmen läßt. Das vorgeformte, nun plastisch in seine endgültige Form gebrachte Gefäß behält dabei die endgültige Form.

Zuletzt erfolgt eine Endbehandlung des Gefäßes, die beispielsweise bei Keramikgefäßen ein Trocknen, Brennen oder auch Färben des Gefäß umfaßt.

Nach dem neuen Verfahren findet keine Relativbewegung des Materials des Gefäßes mit der Formoberfläche statt, so daß auch Verschleiß vernachlässigbar ist. Auch die Produktionszeit für Gefäße wird gegenüber bekannten Verfahren erheblich verringert, da in recht einfach zu handhabender Weise zur Formgebung lediglich im Innenraum des Gefäßes ein Druck, vorzugsweise ein Luftdruck, aufzubauen ist.

Für das einzusetzende Fluid ist die Randbedingung einzuhalten, daß es mit geringem Aufwand mit dem erforderlichen Druck bereitgestellt werden kann. Diese Randbedingung ist insbesondere beim Einsatz von Druckluft ohne weiteres erfüllt, die mit handelsüblichen Kompressoren ohne weiteres und preisgünstig erzeugt werden kann.

Bei dem Verlauf des Abstands zwischen der Innenfläche der Form und der Außenfläche des Gefäßes ist eine Anpassung an die Streckgrenzen des Gefäßmaterials wünschenswert, so daß Risse oder ähnliches des Gefäßes vermieden werden. Die Streckgrenzen sind materialabhängig. Sie zeigen an, in welchem Umfang das vorgeformte Gefäß bei Erhaltung einer geschlossenen Ausßenfläche noch gedehnt oder ausgeweitet werden kann. Es hat sich herausgestellt, dass die Verformungen, die durch das erfindungsgemäße Verfahren herbeigeführt werden, ganz überwiegend unterhalb der Streckgrenze des jeweils verwendeten Materials liegen.

Nach einer ersten Ausführungsform des erfindungsgemäßen Verfahrens wird die Beaufschlagung der Innenfläche des Gefäßes mit unter Druck stehendem Fluid impulsweise durchgeführt. Bei einigen Formen bzw. Rohstoffen hat sich jedoch gezeigt, dass eine zweite, bevorzugte Ausführungsform empfehlenswert ist, bei der der Druck stetig aufgebaut und der maximale Druck längstens für ca. fünf Sekunden, in der Regel für ca. eine Sekunde und zumindest für Bruchteile einer Sekunde aufrecht erhalten wird. Auf diese Weise wird ein -wenn auch geringfügiges- Zurückfedern des plastischen Materials des vorgefertigten Gefäßes nach dem endgültigen Formen verhindert.

Das neuentwickelte Verfahren hat außerdem die Vorteile, daß aus einem relativ einfach gestalteten, in Rohform vorliegenden Gefäß, wie einem Gefäß in Blumentopfform, ein kompliziert geformtes Stück gefertigt werden kann. Auch der Wechsel zwischen verschiedenen Formen kann in kurzer Zeit bewerkstelligt werden. Der Platzbedarf für die erforderlichen Einrichtungen des Verfahren ist gering.

Als Formen für die Durchführung des erfindungsgemäßen Verfahrens eignen sich übliche Formen, die z. B. aus Metall gedreht sind. Bevorzugt werden Aluminiumformen eingesetzt. Die Formen können auch beschichtet sein, beispielsweise zum Erzielen besonderer Oberflächeneffekte.

Vorzugsweise ist die Gefäßöffnung beim Beaufschlagen des Innenraums des Gefäßes mit Druck mit einer geeigneten Abdeckplatte, beispielsweise einem Deckel verschlossen, der eine Öffnung für den Durchtritt des unter Druck stehenden Fluids aufweist.

Es ist ohne weiteres ersichtlich, daß die Einheit aus Gefäß, Fluidquelle und etwaigen, dazwischen angeordneten Bauteilen, in geeigneter Weise fluiddicht zu gestalten ist. Dazu werden bekannte Befestigungsmittel eingesetzt, die dem Fachmann geläufig sind. Hierzu gehören beispielsweise Federn, mit denen die Abdeckplatte an der Form fixiert werden kann. Alternativ kann eine Andruckvorrichtung verwendet werden, die im einfachsten Fall, wenn beispielsweise die Abdeckplatte von oben auf die Form aufgesetzt wird, aus einer ausreichend dimensionierten Beschwerung bestehen kann. Es ist aber auch eine Andruckvorrichtung vorstellbar, bei der die Abdeckplatte an einem fahrbaren Gestell fixiert ist, und bei der die Andruckvorrichtung bei aufgesetzter Abdeckplatte dann bezogen auf die Form und das vorgefertigte Gefäß fixiert wird.

Nach einer besonders bevorzugten Ausführungsform ist die Form, die zur Durchführung des erfindungsgemäßen Verfahrens eingesetzt wird, auf der Innenfläche reliefartig gestaltet, so dass das in der Form erzeugte, fertige Gefäß eine reliefartig gestaltete Außenfläche aufweist.

Eine Ausführungsform des erfindungsgemäßen Verfahrens sowie einer zur Durchführung des Verfahrens geeigneten Vorrichtung werden nachstehend an Hand der Figuren beschrieben. Es zeigen:
- Fig. 1: ein vorgefertigtes Gefäß
- Fig. 2: eine Form mit zwei Formhälften
- Fig. 3: eine Form mit vorgefertigtem Gefäß
- Fig. 4: eine Form mit vorgefertigtem Gefäß und Druckluft-Zuführung
- Fig. 5: eine Form mit endgültig geformtem Gefäß
- Fig. 6: endgültig geformtes Gefäß

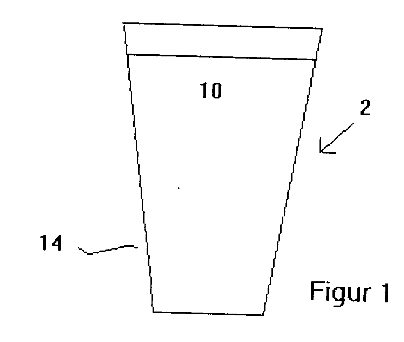

Fig. 1 zeigt ein vorgefertigtes Gefäß 2. Das vorgefertigte Gefäß 2 besteht aus einer Tonmischung. Das vorgefertigte Gefäß 2 wurde hier in einer Form für Blumentöpfe im Rahmen einer Großserien-Produktion als Rohling hergestellt. Das vorgefertigte Gefäß 2 ist noch nicht gebrannt, ist also noch plastisch. Die Tonmischung ist unter Druckeinwirkung formbar.

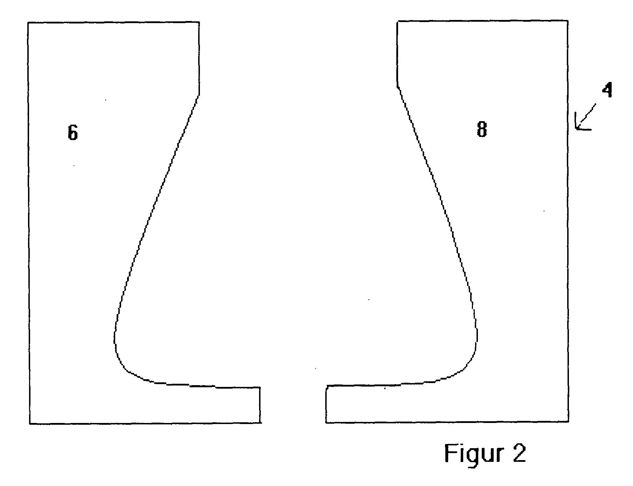

Fig. 2 zeigt eine Form 4, die aus zwei Formhälften 6,8 besteht. Die Formhälften bestehen aus Aluminum, in die die Kontur des endgültig geformten Gefäßes eingefräst wurde.

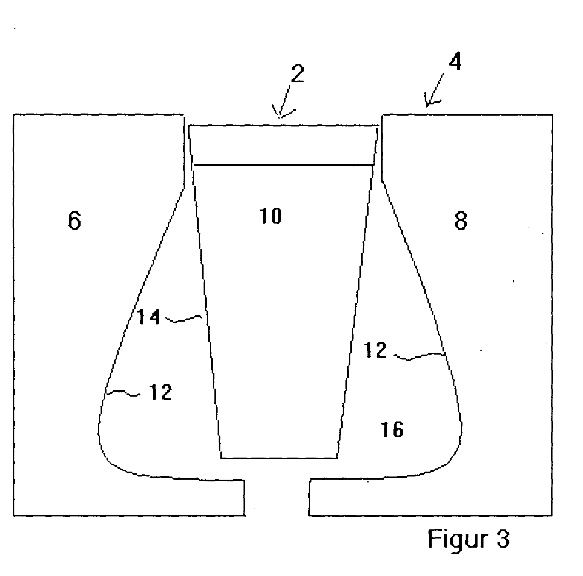

Fig. 3 zeigt das vorgefertigte Gefäß 2 in der Form 4. Die Formhälften 6,8 schließen dabei bündig mit dem Gefäßrand 10 des vorgefertigten Gefäßes 2 ab. Die Form 4 zeigt an den Innenflächen 12 der Formhälften 6, 8 eine bauchige Kontur. Zwischen den Außenflächen 14 des vorgefertigten Gefäßes 2 und den Innenflächen 12 der Form 4 entsteht nach Einsetzen des vorgefertigten Gefäßes 2 in die Form 4 ein Zwischenraum 16.

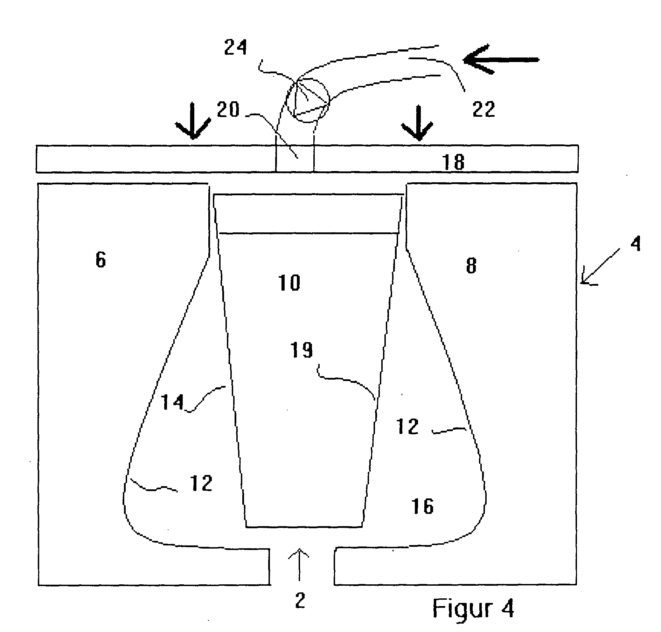

Fig. 4 zeigt die vorbeschriebene Anordnung, bei der zusätzlich eine Druckluft-Zufuhr angebracht ist. Nach Einsetzen des vorgefertigten Gefäßes 2 in die Form 4 wird eine Abdeckplatte 18 auf den Gefäßrand 10 aufgesetzt. In die Abdeckplatte 18 ist eine Bohrung 20 eingearbeitet, an die ein Druckluft-Anschluss 22 mit einem Ventilverschluss 24 anschließt. Die Druckluft-Quelle, beispielsweise ein Kompressor, ist nicht näher dargestellt.

Nach dem Aufsetzen der Abdeckplatte 18 wird der Ventilverschluss 24 geöffnet und die Druckluft strömt stetig mit einem Druck von ca. 5,5 bar, auf die Innenfläche 19 des vorgefertigten Gefäßes 2 ein. Der zum Verformen des plastischen vorgefertigten Gefäßes 2 erforderliche Druck beträgt maximal 10 bar, liegt aber vorteilhafter Weise unter 6 bar, so dass einfache Druckluft-Erzeuger als Druckluft-Quelle für dieses Verfahren eingesetzt werden können.

Damit die Abdeckplatte 18 nicht beim Aufbau des erforderlichen Drucks von der Form 4 abhebt, wird die Abdeckplatte 18 entweder durch eine Andruckvorrichtung an die Form 4 angepresst oder durch Mittel zum Befestigen, vorzugsweise Klammern, an der Form fixiert.

Die Form 4 ist im Verhältnis zum vorgefertigten Gefäß 2 so gewählt, dass die Dehnung des plastischen vorgefertigten Gefäßes 2 die Streckgrenze der Tonmischung nicht übersteigt. Ein Aufreißen der Außenfläche 14 des vorgefertigten Gefäßes 2 ist deshalb nicht zu befürchten.

Der Druckanstieg führt dazu, dass sich das plastische Material des vorgefertigten Gefäßes 2 ausdehnt, bis die Außenfläche 14 des vorgefertigten Gefäßes 2 an der Innenfläche 12 der Form 4 anliegt. Grundsätzlich ist es möglich, den Druck impulsartig aufzubringen und wieder abzubauen. Dabei kann es, je nach gewählter Form, aber vorkommen, dass das plastische, vorgefertigte Gefäß 2 sich wieder von der Innenfläche der Form 4 löst. Diese Formänderung ist unerwünscht.

Es wird daher bevorzugt, dass der Druck stetig aufgebaut und für kurze Zeit, in der Regel für Bruchteile von Sekunden, auf maximaler Stärke gehalten wird. Durch diese Maßnahme wird das Zurückfedern des plastischen Materials wirksam verhindert. Das erfindungsgemäße Verfahren zum Verfomen des vorgefertigten Gefäßes 2 dauert -je nach Größe des vorgefertigten Gefäßes- wenige Sekunden, in der Regel weniger als 5 Sekunden.

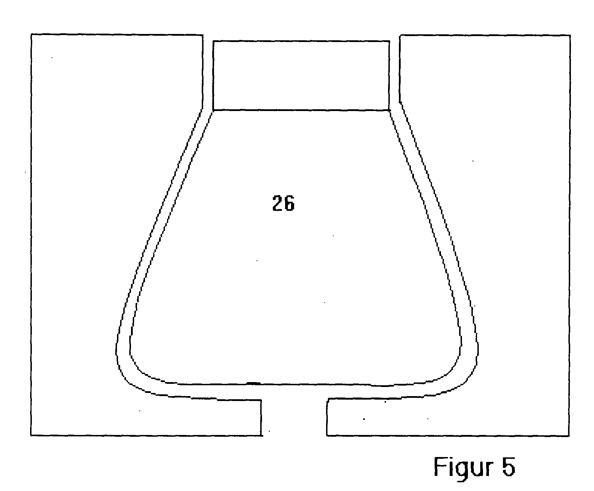

Nachdem die Außenfläche 14 des vorgefertigten Gefäßes 2 vollständig an der Innenfläche 12 der Form4 anliegt, wird der Druckluft-Ventilverschluss 24 betätigt, so dass der Druck abgebaut wird und die Abdeckplatte 18 wird von dem Gefäßrand 10 und ggf. der Form 4 abgenommen (siehe Fig. 5).

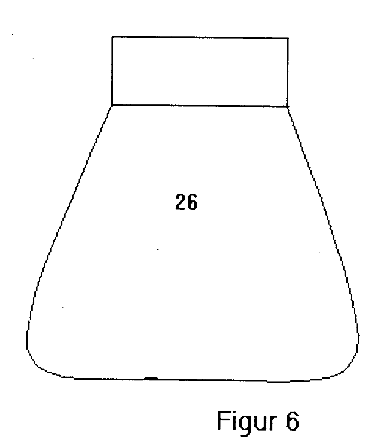

Die Formhälften 6, 8 der Form 4 werden auseinander bewegt, so dass das fertig geformte Gefäß 26 -wie in Fig. 6 dargestellt- entnommen und einer weiteren Bearbeitung zugeführt werden kann.

## Patentansprüche

1. Verfahren zur Herstellung eines Gefäßes (26), mit den Schritten:
- Bereitstellen eines vorgefertigten, plastischen Gefäßes (2) mit einer Gefäßöffnung (10),
- Bereitstellen einer Form, die so beschaffen ist, daß das Gefäß (2) in die Form (4) gesetzt werden kann, wobei an mindestens einem Abschnitt der Außenfläche (14) des Gefäßes (2) die Innenfläche (12) der Form (4) in einem Abstand (16) zu der Außenfläche (14) des Gefäßes (2) liegt,
- im wesentlichen fluiddichtes Anschließen der Gefäßöffnung (10) an eine Fluidquelle mit einem Druck, der ausreicht, das Gefäßmaterial gegen die Innenfläche (12) der Form (4) zu drücken,
- Beaufschlagen der Innenfläche (19) des Gefäßes (2) mit dem Fluid aus der Fluidquelle,
- Abnehmen der Form (4) und
- Endbehandlung des Gefäßes (26).

2. Verfahren nach Anspruch 1, bei dem der Verlauf des Abstands zwischen der Innenfläche (12) der Form (4) und der Außenfläche (14) des Gefäßes (2) an die Streckgrenzen des Gefäßmaterials angepaßt ist.

3. Verfahren nach einem der Ansprüche 1 oder 2, bei dem die Beaufschlagung der Innenfläche (19) des Gefäßes (2) mit unter Druck stehendem Fluid impulsweise erfolgt.

4. Verfahren nach Anspruch 1 oder 2, **dadurch gekennzeichnet, dass** der Aufbau des Drucks stetig erfolgt, und dass der maximale Druck bis zu ca. 5 Sekunden, vorzugsweise bis zu ca. 1 Sekunde, besonders bevorzugt für Bruchteile von Sekunden aufrecht erhalten wird.

5. Verfahren nach Anspruch 1, **dadurch gekennzeichnet, dass** der zum Verformen des vorgefertigten Gefäßes (2) erforderliche Druck des Fluids maximal 10 bar, vorzugsweise maximal 6 bar beträgt.

6. Verfahren nach Anspruch 1, **dadurch gekennzeichnet, dass** als Fluid Druckluft verwendet wird.

7. Verfahren nach Anspruch 1, **dadurch gekennzeichnet, dass** als plastisches Material eine Tonmischung verwendet wird.

8. Verfahren nach Anspruch 1, **dadurch gekennzeichnet, dass** mindestens das vorgefertigte Gefäß (2) und dessen Gefäßrand (10) von einer Abdeckplatte (18) überdeckt sind, die mit Mitteln (20, 22, 24) zum Zuführen des Fluids versehen ist.

9. Verfahren nach Anspruch 8, **dadurch gekennzeichnet, dass** die Abdeckplatte (18) durch eine Andruckvorrichtung an das vorgefertigte Gefäß angedrückt wird.

10. Verfahren nach Anspruch 8, **dadurch gekennzeichnet, dass** die Abdeckplatte (18) mittels Befestigungsmitteln, vorzugsweise Klammern, an der Form (4) oder dem vorgefertigten Gefäß (2) fixiert wird.

11. Verfahren nach Anspruch 1, **dadurch gekennzeichnet, dass** die Form aus Metall, vorzugsweise Aluminium, oder aus einem keramischen Material ist.

12. Gefäß (26) aus ursprünglich plastischem Material, das zunächst als vorgefertigtes Gefäß (2) hergestellt ist und anschließend unter Einwirkung von Druck in eine endgültige Form gebracht und endbehandelt, insbesondere getrocknet ist.

13. Vorrichtung mit einer Form (4) mit mindestens zwei Formhälften (6, 8), die zum Formen eines vorgefertigten Gefäßes (2) ausgelegt sind und mit einer Abdeckplatte (18), die mit Mitteln (20, 22, 24) zum Zuführen eines druckbeaufschlagten Fluids in die Form ausgestattet ist.

14. Vorrichtung nach Anspruch 13, **dadurch gekennzeichnet, dass** die Form (4) aus Metall, vorzugsweise Aluminium, hergestellt ist.

15. Vorrichtung nach Anspruch 13, **dadurch gekennzeichnet, dass** die Abdeckplatte (18) mit Mittel (20, 22, 24) zum Befestigen an der Form, vorzugsweise mit Federn, ausgestattet ist.

16. Vorrichtung nach Anspruch 13, **dadurch gekennzeichnet, dass** die Abeckplatte (18) mit einer Andruckvorrichtung zum Andrücken an die Form ausgestattet ist.
